Europäisches Patentamt

**European Patent Office**

Office européen des brevets

(11) Veröffentlichungsnummer: **0 057 259**
**B1**

(12) # EUROPÄISCHE PATENTSCHRIFT

(45) Veröffentlichungstag der Patentschrift:
02.10.85

(51) Int. Cl.⁴: **G 01 C 3/08**, G 03 B 3/10

(21) Anmeldenummer: **81108439.1**

(22) Anmeldetag: **16.10.81**

(54) Schaltungsanordnung zur binären Codierung der Sensorsignale einer Mehrzahl von optoelektronischen Sensorelementen und Verfahren zu ihrem Betrieb.

(30) Priorität: **30.01.81 DE 3103154**

(73) Patentinhaber: **Siemens Aktiengesellschaft, Berlin und München Wittelsbacherplatz 2, D-8000 München 2 (DE)**

(43) Veröffentlichungstag der Anmeldung:
**11.08.82 Patentblatt 82/32**

(72) Erfinder: **Grassl, Hans-Peter, Dipl.-Phys., Obere Bahnhofstrasse 12, D-8011 Zorneding (DE)**
Erfinder: **Herbst, Heiner, Dr., Anechostrasse 29a, D-8000 München 82 (DE)**
Erfinder: **Endlicher, Frank, Dipl.-Phys., Plievierpark 10, D-8000 München 83 (DE)**

(45) Bekanntmachung des Hinweises auf die Patenterteilung:
**02.10.85 Patentblatt 85/40**

(84) Benannte Vertragsstaaten:
**DE FR GB**

(56) Entgegenhaltungen:
**EP - A - 0 004 584**
**EP - A - 0 025 170**
**EP - A - 0 025 171**
**EP - A - 0 025 172**
**EP - A - 0 025 174**
**EP - A - 0 025 175**
**EP - A - 0 026 834**
**CH - A - 545 964**
**DE - A - 2 813 914**
**DE - A - 2 838 647**
**DE - A - 2 849 800**
**DE - A - 3 001 767**
**DE - A - 3 005 044**
**DE - A - 3 007 390**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf eine Schaltungsanordnung zur binären Codierung der Sensorsignale eine Mehrzahl von optoelektronischen Sensorelementen nach dem Oberbegriff des Anspruchs 1 und auf Verfahren zu ihrem Betrieb.

Eine Schaltungsanordnung dieser Art ist in der europäischen Patentanmeldung EP-A-0 025 170 beschrieben (Art. 54(3) EPÜ). Sie wird beispielsweise bei fotografischen oder elektronischen Kameras eingesetzt, um die Signale von Sensorelementen auszuwerten, die zur optoelektronischen Messung der Entfernung eines zu fotografierenden Gegenstandes dienen. Aus den binären Ausgangssignalen wird ein resultierendes Signal abgeleitet, das einer Anzeigevorrichtung zur Entfernungsanzeige oder einer Scharfeinstellvorrichtung zum Einstellen des optimalen Abstands des Kameraobjektivs von einer Bildebene und damit zur Fokussierung der Abbildung des Gegenstandes auf diese Bildebene zugeführt wird. Dabei werden die als Komparatoren ausgebildeten Bewerter jeweils mit den analogen Sensorsignalen zweier miteinander zu vergleichender Sensorelemente beaufschlagt. Die herstellungsbedingten Kennwertetoleranzen der in den Bewertern enthaltenen Schaltungselemente beeinflussen jedoch die Genauigkeit, mit der der Amplitudenvergleich zwischen den zugeführten Sensorsignalen und damit die binäre Codierung der Sensorsignale erfolgt.

Aus der DE-A-2 838 647 ist ein Verfahren zur automatischen oder halbautomatischen Entfernungsmessung und Scharfeinstellung der Abbildung eines Gegenstandes auf eine Bildebene bekannt, bei der zwei zeilenförmige Bildausschnitte auf zwei Zeilensensoren abgebildet und die Ausgangssignale der Zeilensensoren digital weiterverarbeitet werden. Diese Weiterverarbeitung besteht in einer Folge von Korrelationsmessungen bei jeweils unterschiedlichen gegenseitigen Zuordnungen oder zeilenförmigen Bildausschnitte, was durch zwei den Zeilensensoren individuell zugeordnete Schieberegister erreicht wird, von denen jedes der Signale eines der beiden Zeilensensoren speichert. Über zwei Vergleichsmessungen und einen nachgeschalteten Inverter wird dabei ein Signal erzeugt, das jeweils die Meßdauer für die Zeilensensoren begrenzt.

Die europäische Patentanmeldung EP-A-0 004 584 beschreibt eine Anordnung zur Messung der Entfernung oder Geschwindigkeit eines Gegenstandes, bei der zwei über optische Einrichtungen erhaltene Hilfsabbildungen des Gegenstandes über zwei CTD-Bildsensoren ausgewertet werden, wobei eine gegenseitige Verschiebung der Signale beider Bildsensoren entweder über einen drehbaren Spiegel innerhalb einer der optischen Einrichtungen oder durch ein einstellbares Verzögerungsbild vor dem Eingang eines der beiden Bildsensoren erzielt wird. Aus der Differenz wird ein die Entfernung oder die Geschwindigkeit des Gegenstandes angebendes Signal abgeleitet.

Der DE-A-2 813 914 ist andererseits eine Anordnung zur Scharfeinstellung der Abbildung eines Gegenstandes auf eine Bildebene entnehmbar, die der vorstehend erwähnten Anordnung nach der EP-A-0 004 584 entspricht. Hier wird jedoch aus der Differenz der analog bewerteten Ausgangssignale der Bildsensoren ein Stellsignal zur optimalen Einstellung eines die Abbildung liefernden Objektivs von der Bildebene abgeleitet.

Der Erfindung liegt die Aufgabe zugrunde, eine Schaltungsanordnung der eingangs erwähnten Art anzugeben, bei der der Einfluß der herstellungsbedingten Kennwertetoleranzen auf die Genauigkeit der binären Codierung kleiner ist als bei den herkömmlichen Schaltungsanordnungen. Das wird erfindungsgemäß durch die Merkmale des kennzeichnenden Teils des Anspruchs 1 erreicht.

Der mit der Erfindung erzielbare Vorteil liegt insbesondere darin, daß die Kennwertetoleranzen der in den einzelnen Bewertern vorgesehenen Barrieretransistoren und Inverter die Genauigkeit der binären Codierung nicht beeinflussen. Bei den Barrieretransistoren wird dieser Einfluß ausgeschaltet, weil sie sowohl zum Rücksetzen der Sensorelemente als auch zum Bewerten der in denselben optisch generierten Ladungen herangezogen werden, während die Kennwertetoleranzen der Inverter deshalb weitgehend ohne Belang sind, weil das Überschreiten der genannten Barrieren durch von der Belichtung der Sensorelemente abhängige Mengen von Ladungsträgern als das eigentliche Kriterium für eine Umschaltung der Inverter aus einem ersten stabilen Schaltzustand in einen zweiten dient. Der Größenvergleich zwischen den optisch erzeugten Ladungen zweier Sensorelemente wird dabei durch die Auswertung der zeitlichen Aufeinanderfolge der Umschaltvorgänge der beiden beteiligten Inverter durchgeführt, wobei es darauf ankommt, welcher der beiden als erster umschaltet.

Die Ansprüche 2 bis 12 geben vorteilhafte Ausgestaltungen und Weiterbildungen der Schaltungsanordnung nach der Erfindung an, während die Ansprüche 13 und 14 auf vorteilhafte Verfahren zum Betrieb von Schaltungsanordnungen nach der Erfindung gerichtet sind.

Die Erfindung wird nachfolgend anhand der Zeichnungen näher beschrieben. Dabei zeigt

Fig. 1 das Prinzipschaltbild eines Ausführungsbeispiels der Erfindung,

Fig. 2 eine Ausgestaltung einer Teilschaltung von Fig. 1,

Fig. 3 Spannungs-Zeit-Diagramme zur Erläuterung von Fig. 1,

Fig. 4 Diagramme zur weiteren Erläuterung von Fig. 1,

Fig. 5 eine Weiterbildung des Ausführungsbeispiels nach Fig. 1,

Fig. 6 Spannungs-Zeit-Diagramme zur Erläuterung von Fig. 5,

Fig. 7 eine Schaltungsvariante zu Fig. 2 und

Fig. 8 eine weitere Schaltungsvariante zu Fig. 2.

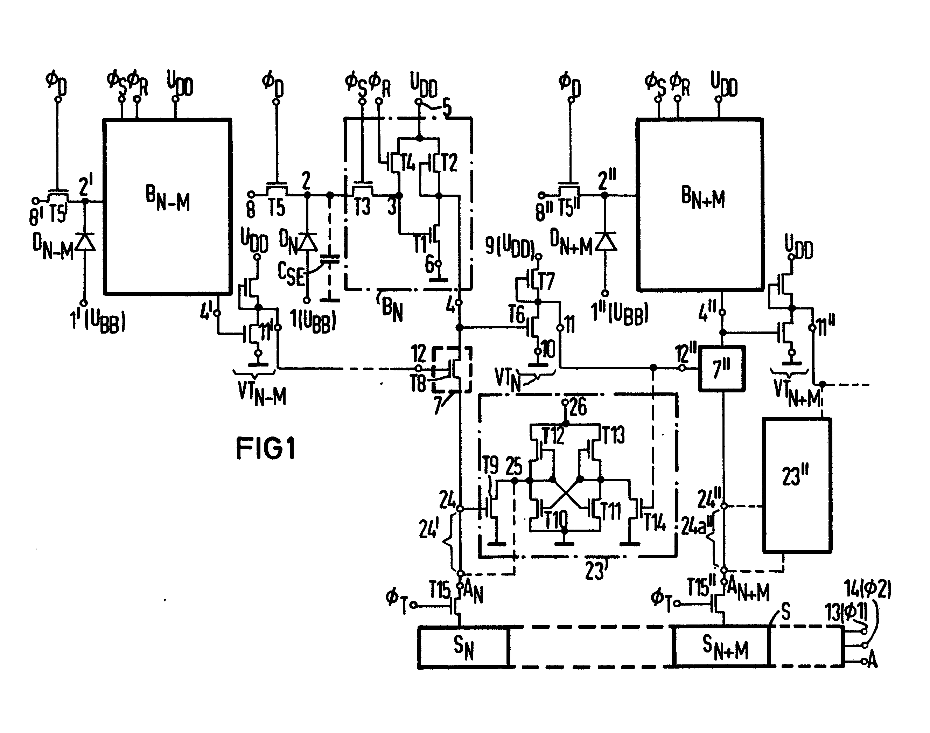

In Fig. 1 sind drei Fotodioden $D_{N-M}$, $D_N$ und $D_{N+M}$ dargestellt, die eine Mehrzahl von nebeneinander in einer Reihe angeordneten Fotodioden andeuten sollen. $D_N$ stellt dabei die N'te Fotodiode dieser Reihe dar, während $D_{N-M}$ und $D_{N+M}$ jeweils die M'ten Nachbardioden links und rechts neben $D_N$ bezeichnen. Bei M = 1 handelt es sich also um die jeweils zu $D_N$ unmittelbar benachbarten Dioden. Andererseits kann M aber auch einen Zahlenwert von 2, 3, 4 usw. annehmen, wobei lediglich die Bedingung eingehalten werden muß, daß $D_{N-M}$ und $D_{N+M}$ zu $D_N$ nur einen relativ kleinen Abstand aufweisen. Bei M $\neq$ 1 liegen zwischen den dargestellten Fotodioden noch jeweils andere, die aus Gründen der Übersichtlichkeit nicht dargestellt sind.

Betrachtet man die Fotodiode $D_N$, so liegt sie mit ihrer Anode an einem Anschluß 1, der mit einer Spannung $U_{BB}$ beschaltet ist, während ihre Kathode mit einem Anschluß 2 verbunden ist. Diesem ist ein Bewerter $B_N$ nachgeschaltet, der einen Barrieretransistor T3, einen Rücksetztransistor T4 und einen Inverter aufweist, der aus einem Schalttransistor T1 und einem als Lastelement geschalteten Feldeffekttransistor T2 besteht. Im einzelnen ist der Anschluß 2 über die Source-Drain-Strecke des Barrieretransistors T3 mit dem Eingang 3 des Inverters T1, T2 verbunden. Das Gate von T3 ist mit einer Impulsspannung $\Phi_S$ beschaltet. Der Gate- und Sourceanschluß von T2 sind miteinander verbunden und an den Ausgang 4 des Bewerters geführt. Die Serienschaltung T1, T2 liegt zwischen einem Anschluß 5, der mit einer konstanten Spannung $U_{DD}$ beschaltet ist, und einem über einen Anschluß 6 zugeführten Bezugspotential. Der Rücksetztransistor T4, dessen Gate eine Taktimpulsspannung $\Phi_R$ zugeführt wird, ist mit seiner Source-Drain-Strecke zwischen den Invertereingang 3 und den Anschluß 5 geschaltet. Ein solcher Bewerter ist bereits in der deutschen Patentanmeldung P 29 36 492.9 beschrieben.

Der Ausgang des Bewerters $B_N$ ist über einen elektronischen Schalter 7 an einen Schaltungsausgang $A_N$ geführt. Der Anschluß 2 ist über einen Schalttransistor T5, dessen Gate mit einer Taktimpulsspannung $\Phi_D$ beschaltet ist, mit einem Anschluß 8 verbunden, der mit dem Bezugspotential der Schaltung beaufschlagbar ist. Dem Anschluß 2 der Fotodiode $D_N$ entsprechen die Anschlüsse 2' und 2'' der Fotodioden $D_{N-M}$ und $D_{N+M}$, denen Bewerter $B_{N-M}$ und $B_{N+M}$ nachgeschaltet sind, die $B_N$ im Aufbau entsprechen. Sie sind an den einander entsprechenden Anschlüssen mit den gleichen Spannungen beschaltet wie $B_N$. Die Anschlüsse 2' und 2'' sind über zugeordnete Schalttransistoren T5' und T5'', die mit ihren Gateanschlüssen an der Impulsspannung $\Phi_D$ liegen, an Anschlüsse 8' und 8'' geführt, die ebenfalls mit dem Bezugspotential beaufschlagbar sind. Die den Anoden von $D_{N-M}$ und $D_{N+M}$ zugeordneten Anschlüsse 1' und 1'' liegen an der Spannung $U_{BB}$. Die Ausgänge 4' und 4'' der Bewerter $B_{N-M}$ und $B_{N+M}$ entsprechen dem Ausgang 4 von $B_N$.

Dem Ausgang 4 ist ein Inverter $VT_N$ nachgeschaltet, der aus der Serienschaltung eines Transistors T6 und eines Lastelements besteht, das bei dem dargestellten Ausführungsbeispiel durch einen Transistor T7 gebildet ist, dessen Gate- und Sourceanschluß miteinander verbunden sind. Die Serienschaltung ist einerseits über einen Anschluß 9 an die konstante Spannung $U_{DD}$ und über einen Anschluß 10 an das Bezugspotential gelegt. Der Ausgang des Inverters $VT_N$ ist mit 11 bezeichnet. Entsprechend ausgebildete Inverter $VT_{N-M}$ und $VT_{N+M}$, deren Ausgänge die Bezugszeichen 11' und 11'' aufweisen, sind den Ausgängen 4' und 4'' nachgeschaltet.

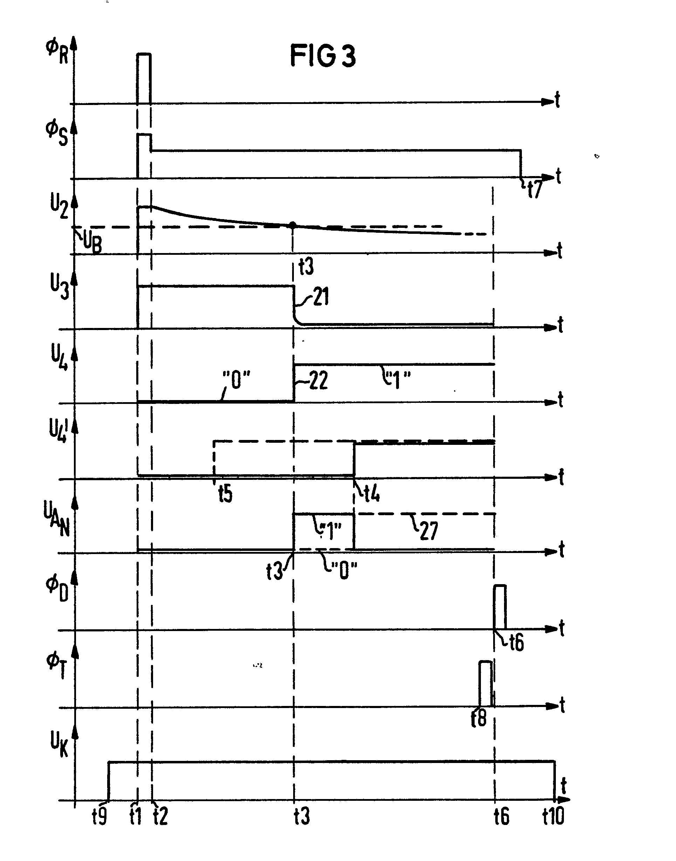

Die Ausgänge 4, 4' und 4'' sind in der Weise miteinander verknüpft, daß der Ausgang 11' von $VT_{N-M}$ mit einem Steuereingang 12 des elektronischen Schalters 7 verbunden ist, während der Ausgang 11 an den entsprechenden Steuereingang 12'' eines elektronischen Schalters 7'' geführt ist, über den der Ausgang 4'' mit einem Schaltungsausgang $A_{N+M}$ verbunden ist. Hieraus ergibt sich ganz allgemein, daß die vorhandenen Fotodioden jeweils paarweise miteinander verknüpft sind, wobei die beiden Fotodioden jedes Paares jeweils einen M-fachen Diodenabstand voneinander aufweisen. Zu jedem dieser Paare gehört ein Schaltungsausgang, z. B. zu den Fotodioden $D_{N-M}$ und $D_N$ der Schaltungsausgang $A_N$, zu $D_N$ und $D_{N+M}$ der Schaltungsausgang $A_{N+M}$ usw. Falls M von 1 abweicht, sind auch die in Fig. 1 nicht dargestellten Sensorelemente nach dieser Regel zusammengefaßt, so daß weitere in Fig. 1 nicht dargestellte Schaltungsausgänge $A_{N+1}$ für die Sensorelemente $D_{N-M+1}$ und $D_{N+1}$, $A_{N+2}$ für die Sensorelemente $D_{N-M+2}$ und $D_{N+2}$ usw. in Betracht zu ziehen sind. Die Schaltungsausgänge, z. B. $A_N$ und $A_{N+M}$, sind zweckmäßigerweise mit den Eingängen von zugeordneten Stufen $S_N$, $S_{N+M}$ eines statistischen oder dynamischen Schieberegisters S verbunden, welches Anschlüsse 13 und 14 zur Zuführung von Taktimpulsspannungen $\Phi 1$ und $\Phi 2$ aufweist. Der Aufbau solcher Stufen ist z. B. den Seiten 65 bis 69 des Buches »Semiconductor Memory Design and Application« von Luecke, Mize und Carr, International Student Edition, McGraw-Hill Kogakusha Ltd., Tokyo, 1973 und insb. den Figuren 3.5 und 3.7 zu entnehmen. Bei der dort beschriebenen Ausbildung der Stufen $S_N$ usw. sind die Schaltungsausgänge $A_N$ usw. jeweils mit den Eingängen von Invertern beschaltet, die in den einzelnen Stufenschaltungen enthalten sind. A bezeichnet einen Ausgang von S.

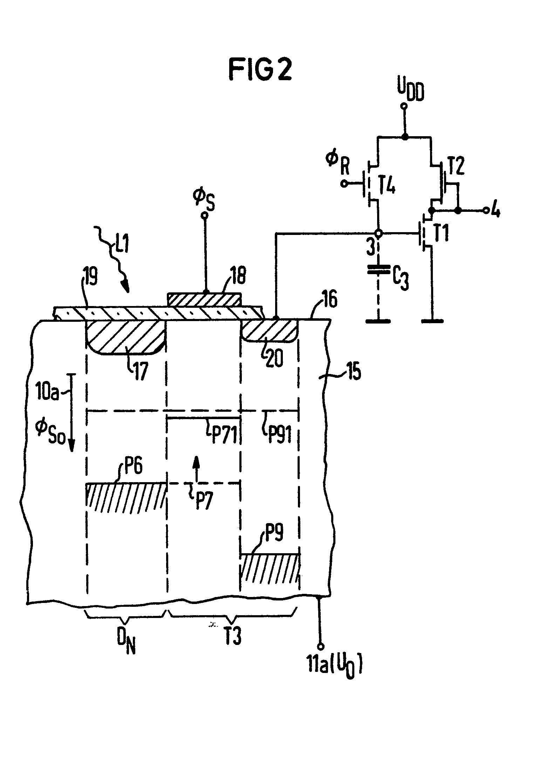

Fig. 2 zeigt einen die Fotodiode $D_N$ enthaltenden Schaltungsteil von Fig. 1, der auf einem Halbleiterkörper 15 eines ersten Leitfähigkeitstyps, der z. B. aus p-dotiertem Silizium besteht, integriert ist. Die Fotodiode $D_N$ besteht aus einem an der Grenzfläche 16 des Halbleiterkörpers 15 angeordneten Gebiet 17 eines zu dem ersten entgegengesetzten Leitfähigkeitstyps. Der dem Gebiet 17 benachbarte Bereich des Halbleiterkörpers 15 wird von einem Gate 18 überdeckt, das durch eine dünne Isolierschicht 19, z. B. aus $SiO_2$, von der Grenzfläche 16 getrennt ist. Das Gate 18 bildet zusammen mit einem Draingebiet 20 eines zu dem ersten entgegengesetzten Leitfähigkeitstyps und einem Teil des Gebiets 17 den Barrieretransistor T3. Das Gebiet 20 stellt gleichzeitig den Eingang 3 des Inverters T1, T2 und insbesondere auch das Sourcegebiet des Rücksetztransistors T4 dar. Die Schaltungsteile T1, T2 und T4 sind entsprechend Fig. 1 schematisch dargestellt. Die Eingangskapazität des Inverters ist mit $C_3$ angedeutet.

Im Betrieb werden die Schaltungspunkte 2 und 3 (Fig. 1) zunächst auf hohe positive Potentiale rückgesetzt. Das geschieht durch einen Taktimpuls $\Phi_R$ und einen Impuls $\Phi_{S1}$ der Spannung $\Phi_S$ (Fig. 3), die zum Zeitpunkt t1 beginnen und den Rücksetztransistor T4 und den Transistor T3 jeweils in den leitenden Zustand schalten. Die Amplitude von $\Phi_{S1}$ ist kleiner als die von $\Phi_R$, und zwar derart, daß der Transistor T3 im Sättigungsbereich betrieben wird, für den die Beziehung $U_3 - U_2 > \Phi_{S1} - U_T - U_2$ gilt. Dabei treten die Spannungen $U_3$ und $U_2$ jeweils an den Schaltungspunkten 3 und 2 auf, während $U_T$ die Einsatzspannung des Transistors T3 bedeutet. Im Sättigungsbereich von T3 wird die Spannung $U_2$ durch $\Phi_{S1}$ eingestellt, wofür die Beziehung $U_2 = \Phi_{S1} - U_T$ gilt.

Unter dem Einfluß der Spannungen $U_2$, $\Phi_{S1}$ und $U_3$, die dem Gebiet 17, dem Gate 18 und dem Gebiet 20 zugeführt werden, stellen sich jeweils Potentialwerte P6, P7 und P9 des Oberflächenpotentials $\Phi_{So}$ ein, die in Fig. 2 in Richtung des Pfeils 10a eingezeichnet sind. Dabei entspricht das obere Ende von 10a dem Bezugszeichen $P_0$, auf dem sich der Halbleiterkörper 15 bei Zuführung einer Substratspannung $U_0$ über den Anschluß 11a befindet. Im rückgesetzten Zustand liegt am Ausgang 4 des Bewerters $B_N$ das logische Signal »0«, das etwa dem Bezugspotential entspricht.

Zum Zeitpunkt t2 wird $\Phi_S$ auf einen Wert $\Phi_{S2}$ erniedrigt, der zwischen $U_2$ zum Zeitpunkt t1 und der Substratspannung $U_0$ liegt. Wenn $\Phi_{S2}$ unterhalb der Spannung $U_2 + U_T$ liegt, so sperrt der Transistor T3, wobei sich unterhalb der Elektrode 18 eine Potentialbarriere P71 ausbildet. Die Potentiale P6 und P9 bleiben hiervon unbeeinflußt, so daß sich der in Fig. 2 ebenfalls eingezeichnete Verlauf P6, P71 und P9 von $\Phi_{So}$ ergibt.

Wird die Fotodiode $D_N$ mit Lichtstrahlen L1 belichtet, so verringern sich die Spannung $U_2$ (Fig. 3) und das Potential P6 (Fig. 2). Im Verlauf einer vorgegebenen Integrationszeit, die mit t2 beginnt, kann das Potential P6 bei hinreichend starker Belichtung die Potentialbarriere P71 erreichen (Zeitpunkt t3). In Fig. 3 ist dieser Zeitpunkt dadurch bestimmt, daß $U_2$ einen Schwellenwert $U_B$ erreicht. Danach fließt ein Teil der Ladung der Fotodiode $D_N$ über P71 in das Gebiet 20 und erniedrigt P9 auf einen Wert P91, wobei die Spannung $U_3$ stark absinkt, wie in Fig. 3 mit 21 angedeutet ist. Die Einsatzspannung von T1 ist so eingestellt, daß sie durch die Spannungsabsenkung 21 von $U_3$ erreicht wird. Das hat zur Folge, daß T1 sperrt und daß die Spannung $U_4$ etwa auf den Wert der Versorgungsspannung ansteigt, was dem logischen Signal »1« entspricht.

Durch eine große Kapazität $C_{SE}$ des Sensorelements zwischen dem Ausgang 2 und dem Bezugspotential im Vergleich zur Eingangskapazität $C_3$ des Inverters T1, T2 wird erreicht, daß die Potentialänderung von P9 auf P91 relativ groß ist, so daß die Einsatzspannung $U_T$ von T1 auch bei größeren herstellungsbedingten Toleranzen während der Spannungsabsenkung 21 sicher erreicht wird.

Der elektronische Schalter 7 wird in Abhängigkeit vom Schaltzustand des Bewerters $B_{N-M}$ so angesteuert, daß er den Ausgang $A_N$ mit dem Ausgang 4 nur solange leitend verbindet, als der Bewerter $B_{N-M}$ noch nicht durch Ladungsträger, welche die Barriere des in ihm enthaltenen Barrieretransistors überschreiten, aus seiner rückgesetzten Lage gekippt worden ist. Nimmt man an, daß das Kippen von $B_{N-M}$ zum Zeitpunkt t4 erfolgt, was in Fig. 3 durch den ausgezogenen Spannungsverlauf der am Ausgang 4' auftretenden Spannung $U_4'$ dargestellt ist, so bewirkt der Spannungssprung 22 von $U_4$ am Schaltungsausgang $A_N$ das Auftreten einer logischen »1«, die im dem Zeitintervall von t3 bis t4 anliegt. In Fig. 3 ist die Zeitabhängigkeit der am Ausgang $A_N$ auftretenden Spannung $U_{AN}$ ebenfalls dargestellt. Kippt jedoch der Bewerter $B_{N-M}$ in dem Fall, daß die Fotodiode $D_{N-M}$ stärker belichtet wird als die Fotodiode $D_N$, schon zum Zeitpunkt t5, was den gestrichelt gezeichneten Verlauf von $U_4'$ bedeutet, so bleibt am Ausgang $A_N$ auch nach dem Zeitpunkt t3 das Signal »0« erhalten (gestrichelter Verlauf von $U_{AN}$ zwischen t3 und t4).

Da das an $A_N$ auftretende »1«-Signal zunächst nur auf das Zeitintervall t3 bis t4 beschränkt ist, ist es zweckmäßig, $A_N$ eine Speichervorrichtung zuzuordnen, die eine Zwischenspeicherung dieses Signals bis zu seiner weiteren Verarbeitung ermöglicht. Zu diesem Zweck dient beispielsweise die Stufe $S_N$ des bereits genannten Schieberegisters S, die das »1«-Signal (oder auch das »0«-Signal bei einer Umschaltung von $B_{N-M}$ zum Zeitpunkt t5) statisch oder dynamisch speichert. T15 und T15'' (Fig. 1) entfallen hierbei.

Der elektronische Schalter 7 (Fig. 1) ist zweckmäßigerweise als Feldeffekt-Schalttransistor T8 ausgebildet, der die Schaltungspunkte 4 und $A_N$ über seine Source-Drain-Strecke miteinander verbindet. Der Steuereingang 12 ist dann an das Gate von T8 geführt.

Eine logische »1« am Ausgang 4 führt zu einer logischen »0« am Ausgang 11 des Inverters $VT_N$, wodurch der elektronische Schalter 7'' über seinen Eingang 12'' gesperrt wird, so daß am Ausgang $A_{N+M}$ nur dann ein »1«-Signal auftreten kann, wenn der Bewerter $B_{N+M}$ vor dem Zeitpunkt t3 aus seiner rückgesetzten Lage gekippt ist.

In der beschriebenen Weise erfolgt also ein Größenvergleich der optisch generierten Ladungsmessungen, die sich in jeweils zwei durch einen gemeinsamen Schaltungsausgang, z. B. $A_N$, zu einem Diodenpaar zusammengefaßten Fotodioden, z. B. $D_{N-M}$ und $D_N$, nach dem Zeitpunkt t2 angesammelt haben. Dabei wird dieser Größenvergleich durch die Auswertung der zeitlichen Aufeinanderfolge der Kippvorgänge der jeweiligen Bewerter, im vorliegenden Beispiel also der Bewerter $B_{N-M}$ und $B_N$, durchgeführt. Bei dem aus $D_N$ und $D_{N+M}$ gebildeten Diodenpaar bestimmt die zeitliche Aufeinanderfolge der Kippvorgänge in den Bewertern $B_N$ und $B_{N+M}$ das sich am Schaltungsausgang $A_{N+M}$ ergebende logische Signal. In entsprechender Weise ergeben sich auch an den weiteren, in Fig. 1 nicht dargestellten Schaltungsausgängen, die jeweils zwei Fotodioden zugeordnet sind, entsprechende logische Vergleichssignale.

Ein Impuls $\Phi_D$, der zum Zeitpunkt t6 auftritt, beendet dann das Zeitintervall, in dem die Schaltungsanordnung nach Fig. 1 die genannten Größenvergleiche zwischen den optisch generierten Ladungsmengen jeweils zweier Fotodioden durchführen kann. Der Impuls $\Phi_D$ bewirkt beim Anliegen des Bezugspotentials an den Anschlüssen 8, 8', 8'' usw. ein Kippen der bis zu diesem Zeitpunkt durch die Lichteinwirkung noch nicht gekippten Bewerter, so daß sämtliche elektronischen Schalter 7, 7'' usw. gesperrt werden. Damit stellen die vor dem Zeitpunkt t6 an den Ausgängen $A_N$, $A_{N+M}$ usw. anliegenden bzw. gespeicherten logischen Signale die von den Fotodioden abgeleiteten binär codierten Signale dar. Zum Zeitpunkt t7 wird dann der Impuls $\Phi_S$ beendet, wodurch die Potentialbarrieren unterhalb der Gateelektroden der Transistoren T3 usw. wieder aufgehoben werden.

Bei der bisher beschriebenen Ausbildung der Schaltung nach Fig. 1 ist es erforderlich, daß die an den Schaltungsausgängen $A_N$, $A_{N+M}$ usw. auftretenden binär codierten Signale in den Schieberegisterstufen $S_N$, $S_{N+M}$ usw. gespeichert werden. Bei einem dynamischen Betrieb des Schieberegisters besteht jedoch die Gefahr, daß die gespeicherte Information durch termische Generation von Ladungen zerstört wird. Daher wird nach einer Weiterbildung der Erfindung jedem der Schaltungsausgänge, z. B. $A_N$, eine bistabile Kippschaltung, z. B. 23, als Zwischenspeicher vorgeschaltet. Dabei ist der ausgangsseitige Anschluß 24 des elektronischen Schalters 7 nicht mit dem Schaltungsausgang $A_N$ verbunden, sondern mit dem Gate eines Feldeffekttransistors T9, dessen Sourceanschluß auf Bezugspotential liegt und dessen Drainanschluß 25 an den Schaltungsausgang $A_N$ geführt ist. In Fig. 1 entfällt hierbei der mit 24' bezeichnete Teil der Verbindungsleitung zwischen 24 und $A_N$. Die bistabile Kippschaltung 23 enthält weiterhin zwei Serienschaltungen, die jeweils aus einem Schalttransistor T10 bzw. T11 und einem Lastelement T12 bzw. T13 bestehen und mit einem ersten gemeinsamen Anschluß 26 an die Versorgungsspannung $U_{DD}$ und mit einem zweiten gemeinsamen Anschluß an das Bezugspotential geschaltet sind. Die Lastelemente T12 und T13 sind als Feldeffekttransistoren realisiert, deren Gate- und Sourceanschlüsse jeweils miteinander verbunden sind. Der genannte Drainanschluß 25 ist an den Verbindungspunkt der Schaltungselemente T10 und T12 geführt, während der entsprechende Verbindungspunkt der Schaltungselemente T11 und T13 über die Source-Drain-Strecke eines Feldeffekttransistors T14 an das Bezugspotential gelegt ist. Das Gate von T14 ist an den Ausgang 11 des Inverters $VT_N$ gelegt. Der Verbindungspunkt der Serienschaltung T10, T12 ist mit dem Gate von T11 verbunden, der Verbindungspunkt von T11 und T13 mit dem Gate von T10.

Die vorstehend beschriebene Kippschaltung 23 speichert eine logische »1«, die im Zeitraum zwischen t3 und t4 am Ausgang 4 des Bewerters $B_N$ auftritt. Das ist durch die gestrichelte Linie 27 in Fig. 3 angedeutet. Das in der Schaltung 23 zwischengespeicherte binär codierte Signal wird der Schieberegisterstufe $S_N$ zweckmäßigerweise über einen Transfer-Transistor T15 zugeführt, was kurz vor dem Zeitpunkt t6 durch einen zum Zeitpunkt t8 auftretenden Abfrageimpuls $\Phi_T$ geschieht, der an das Gate von T15 gelegt wird.

Die dem Schaltungsausgang $A_{N+M}$ zugeordnete Kippschaltung 23'' ist ebenso aufgebaut wie die Kippschaltung 23 und (analog zu 23) an die Schaltungspunkte 24'', 11'' und $A_{N+M}$ angeschlossen. Dabei entfällt der in Fig. 1 mit 24a'' bezeichnete Teil der Verbindungsleitung zwischen 24'' und $A_{N+M}$. Das in der Schaltung 23'' zwischengespeicherte, binär codierte Signal wird der Stufe $S_{N+M}$ des Schieberegisters S über einen Transfer-Transistor T15'' zugeführt, der mittels des Abfrageimpulses $\Phi_T$ leitend geschaltet wird. Auch die anderen Diodenpaaren zugeordneten, nicht eigens dargestellten Schaltungsausgänge sind bei dieser Weiterbildung der Erfindung mit entsprechenden bistabilen Kippschaltungen und Transfer-Transistoren versehen.

Es ist zweckmäßig, die Anschlüsse 8, 8', 8'' usw. im Zeitraum von t2 bis t6 auf ein hohes positives Potential zu legen, um bei einer gleichzeitigen Verwendung der von diesen Anschlüssen zu den Draingebieten der Transistoren T5, T5', T5'' usw. führenden Verbindungsleitungen als zu den Fotodioden $D_N$ usw. benachbarte Überbelichtungskanäle eine Ableitung der bei einer lokalen Überbelichtung einzelner Fotodioden auftretenden Überschußladungen zu erreichen.

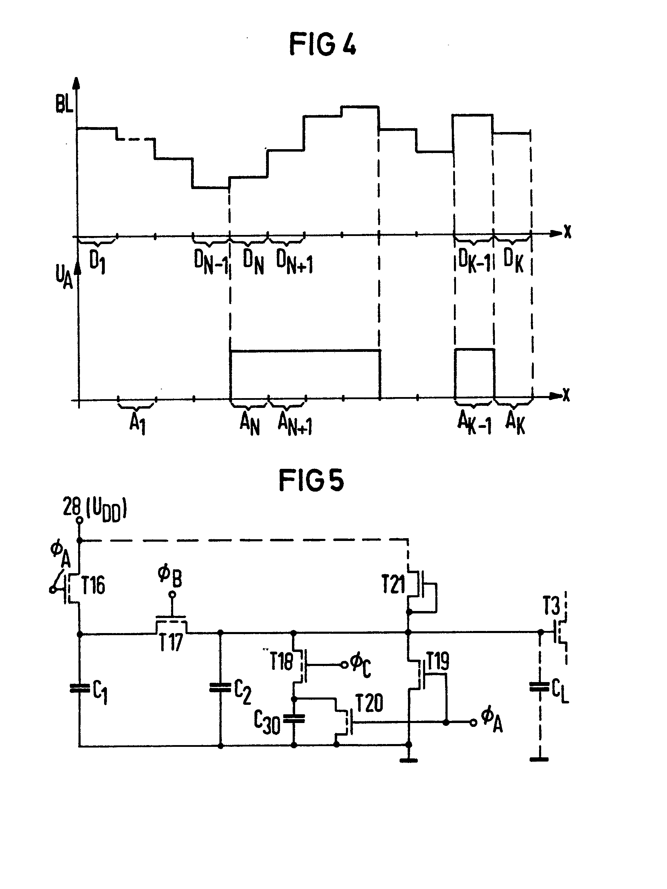

In Fig. 4 sind im oberen Diagramm unterschiedliche Beleuchtungsstärken BL der einzelnen Fotodioden, z. B. in Lumen, einer Diodenreihe in Abhängigkeit von dem Abstand x der einzelnen Dioden von der an einem Ende dieser Reihe angeordneten Diode $D_1$ dargestellt. Die Diodenreihe umfaßt die Dioden $D_1$ bis $D_K$. Die Lage der in Fig. 1 dargestellten drei Dioden $D_N$, $D_{N-M}$ und $D_{N+M}$ wird in Fig. 4 unter der Annahme, daß M = 1 gewählt ist, durch die Abschnitte $D_{N-1}$, $D_N$ und $D_{N+1}$ auf der horizontalen Achse angedeutet. Wird $D_N$ innerhalb der sogenannten Integrationszeit t2 bis t6 stärker belichtet als $D_{N-1}$, so liegt am Schaltungsausgang $A_N$ das logische Signal »1« an. Eine logische »1« ist auch an $A_{N+1}$ abgreifbar, sofern man unterstellt, daß die Diode $D_{N+1}$ stärker belichtet wird als die Diode $D_N$. Da jedoch gemäß Fig. 4 die Diode $D_K$ schwächer belichtet ist als die Diode $D_{K-1}$, liegt am Schaltungsausgang $A_K$, der diesem Diodenpaar zugeordnet ist, eine logische »0« an. Die zu der in Fig. 4 dargestellten Beleuchtungsverteilung BL gehörenden, binär codierten Signale $U_A$ an den Schaltungsausgängen $A_1$ bis $A_K$ sind im unteren Diagramm von Fig. 4 ebenfalls in Abhängigkeit von dem genannten Abstand x der jeweils zugeordneten Dioden $D_1$ bis $D_K$ von der Diode $D_1$ dargestellt.

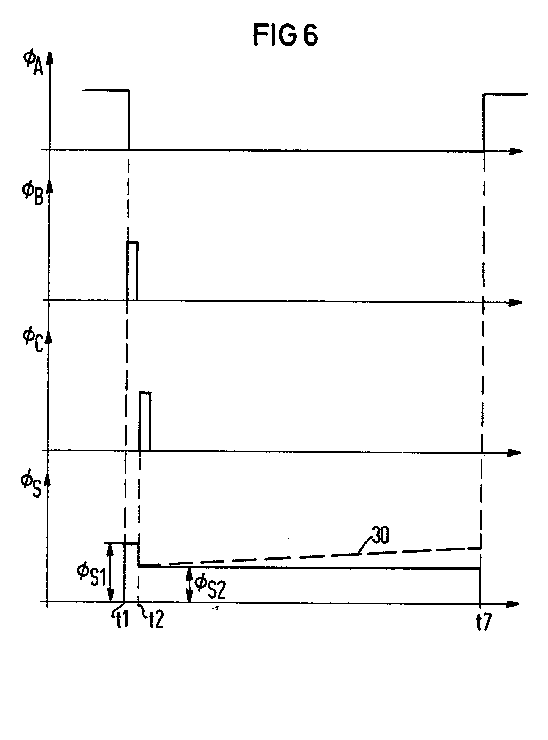

In Fig. 5 ist eine Schaltung dargestellt, die zur Erzeugung der Impulsspannung $\Phi_S$ dient. Sie enthält eine Kapazität $C_1$, deren erste Elektrode über einen Schalttransistor T16 an einen mit der Versorgungsspannung $U_{DD}$ beaufschlagten Anschluß 28 gelegt ist. Andererseits ist die erste Elektrode von $C_1$ über einen Schalttransistor T17 mit dem Gate des Barrieretransistors T3 (Fig. 1), mit der ersten Elektrode einer Kapazität $C_2$ und mit dem Anschluß 29 einer Serienschaltung, bestehend aus einer Kapazität $C_{30}$ und einem Schalttransistor T18, verbunden. Das Gate von T3 ist über einen Schalttransistor T19 an das Bezugspotential der Schaltung geführt, mit dem auch die zweite Elektrode der Kapazität $C_1$, die zweite Elektrode der Kapazität $C_2$ und der andere Anschluß der Serienschaltung $C_3$, T18 verbunden ist. Die Schaltungskapazität zwischen dem Gate von T3 und dem Bezugspotential der Schaltung ist in Fig. 5 mit $C_L$ bezeichnet und mit gestrichelten Anschlußleitungen eingesetzt. Die Gateanschlüsse der Schalttransistoren T16 und T19 sind zusammen mit dem Gateanschluß eines weiteren Schalttransistors T20, der mit seiner Source-Drain-Strecke zu $C_{30}$ parallel geschaltet ist, mit einer Taktimpulsschaltung $\Phi_A$ beschaltet, während die Gateanschlüsse von T17 und T18 mit Taktimpulsspannungen $\Phi_B$ und $\Phi_C$ beaufschlagt sind.

Vor dem Zeitpunkt t1 (Fig. 6) sind die Schalttransistoren T16, T19 und T20 wegen der anliegenden Spannung $\Phi_A$ leitend geschaltet, so daß sich das Gate von T3 auf Bezugspotential befindet. Andererseits lädt sich die Kapazität $C_1$ auf die Versorgungsspannung $U_{DD}$ auf. Nach dem Abschalten von $\Phi_A$ zum Zeitpunkt t1 entsteht beim Auftreten eines Impulses $\Phi_B$ eine Ladungsteilung zwischen $C_1$ und den hinzukommenden Kapazitäten $C_2$ und $C_L$, wobei sich eine Spannung $\Phi_{S1}$ am Gate von T3 einstellt. Zum Zeitpunkt t2 wird durch die Leitendschaltung des Transistors T18 mittels $\Phi_C$ zu der bestehenden Parallelschaltung $C_1$, $C_2$ und $C_L$ noch die Kapazität $C_{30}$ kurzzeitig parallel geschaltet, was zu einer Absenkung von $\Phi_S$ auf den Wert $\Phi_{S2}$ führt. Zum Zeitpunkt t7 tritt dann wieder ein Impuls von $\Phi_A$ auf, der T19 in den leitenden Zustand schaltet und damit die Rückflanke von $\Phi_S$ bestimmt.

Nach einer anderen Weiterbildung der Erfindung ist das Gate des Barrieretransistors T3 über ein Lastelement T21 mit dem Anschluß 28 verbunden. T21 besteht zweckmäßigerweise aus einem Feldeffekttransistor des Verarmungstyps, dessen Gateanschluß mit seinem Sourceanschluß verbunden ist. Über T21 erfolgt im Zeitraum zwischen t2 und t7 eine allmähliche Aufladung der zueinander parallel liegenden Kapazitäten $C_2$ und $C_L$ auf den Wert der Versorgungsspannung $U_{DD}$, so daß sich ein in Fig. 6 gestrichelt gezeichneter Anstieg 30 der Spannung $V_S$ ergibt. Das führt dazu, daß im Integrationsintervall von t2 bis t6 ein ständig fortschreitender Abbau der Potentialbarrieren unterhalb der Gates der Transistoren T3 usw. erfolgt, so daß auch bei einer schwachen Belichtung der Fotodioden $D_N$ usw. die vorhandenen Belichtungsunterschiede zur Ableitung eines Musters von binär codierten Signalen $U_A$ entsprechend Fig. 4 führen.

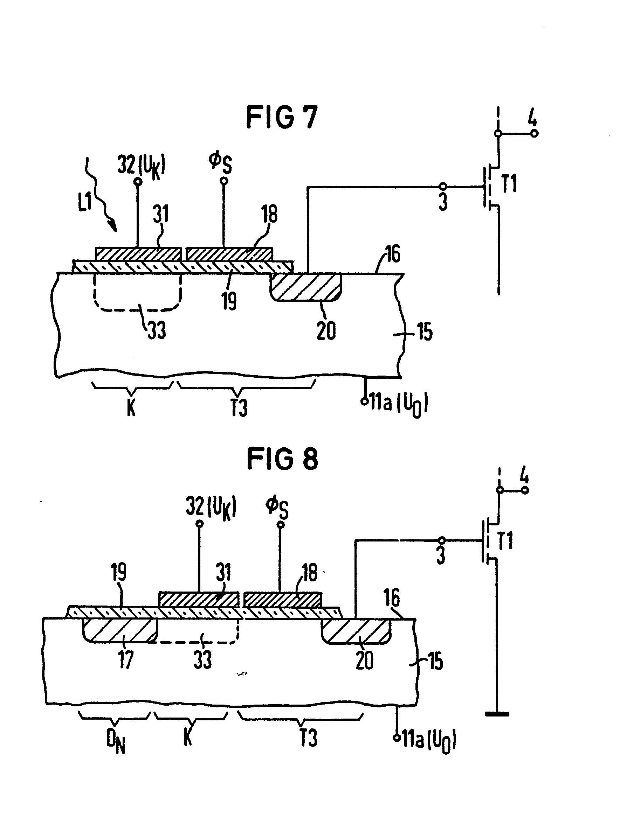

Nach einer anderen Ausgestaltung der Erfindung werden MIS-Kondensatoren (Metall-Isolierschicht-Halbleiter-Kondensatoren) anstelle der bisher beschriebenen Fotodioden $D_N$ usw. als optoelektronische Sensorelemente verwendet. Ein solcher MIS-Kondensator ist in Fig. 7 mit K bezeichnet. Er weist eine Gateelektrode 31 auf, die durch die dünne Isolierschicht 19 von der Grenzfläche 16 Halbleiterkörpers 15 getrennt ist. Sie ist mit einem Anschluß 32 versehen, der mit einer Spannung $U_K$ beschaltet ist. Unter dem Einfluß von $U_K$ bildet sich unterhalb der Gateelektrode 31 eine mit 33 angedeutete Raumladungszone aus. Die übrigen Schaltungsteile der Fig. 7 entsprechen den mit gleichen Bezugszeichen versehenen Schaltungsteilen der Fig. 2. Die Spannung $U_K$ muß so gewählt werden, daß sich unterhalb der Gateelektrode 31 ein Oberflächenpotential $\Phi_{So}$ ausbildet, das dem Potentialwert P6 (Fig. 2) gleichkommt oder diesen übersteigt. $U_K$ wird gemäß Fig. 3 zum Zeitpunkt t9 an den Anschluß 32 angelegt, so daß sich vor dem Rücksetzzeitpunkt t1 unterhalb von 31 schon optisch erzeugte Ladungsträger angesammelt haben. Zum Zeitpunkt t10 wird $U_K$ wieder abgeschaltet. Der Einsatz eines MIS-Kondensators K als Sensorelement bringt den Vorteil einer großen Kapazität $C_{SE}$ mit sich.

Fig. 8 zeigt eine weitere Ausgestaltung der Erfindung, bei der jeweils eine Fotodiode ($D_N$ in Fig. 2) und ein MIS-Kondensator (K in Fig. 7) nebeneinander auf der dünnen Isolierschicht 19 angeordnet sind und zusammen ein optoelektronisches Sensorelement bilden. Die bereits anhand der Fig. 2 und 7 erläuterten Schaltungsteile sind in Fig. 8 mit denselben Bezugszeichen versehen. Die Kapazität $C_{SE}$ ist nach Fig. 8 noch größer als nach Fig. 7. Die Ansteuerung des Anschlusses 32 durch $U_K$ erfolgt in der bereits anhand der Fig. 7 beschriebenen Weise.

Die Schaltungsanordnung nach der Erfindung ist mit besonderem Vorteil wenigstens teilweise auf einem dotierten Halbleiterkörper monolithisch integriert. Bei einem Schaltungsaufbau in n-Kanal-MOS-Technik sind die auf die Substratspannung $U_0$ bezogenen Potentiale und Spannungen mit einem positiven Vorzeichen versehen. Bei einer p-Kanal-MOS-Technik weisen die Spannungen und Potentiale negative Vorzeichen auf, wobei auch die Leitfähigkeitstypen der dotierten Halbleitergebiete durch die jeweils entgegengesetzten zu ersetzen und die Symbole der Fotodioden $D_N$ usw. in Fig. 1 mit entgegengesetzter Polung einzuzeichnen sind.

Abweichend von der bisher beschriebenen linearen Anordnung der Sensorelemente, z. B. $D_{N-M}$, $D_N$, $D_{N+M}$ usw., können diese auch in einer beliebigen räumlichen oder flächenhaften gegenseitigen Zuordnung stehen, ohne daß die Ableitung der binär codierten Ausgangssignale hierdurch beeinträchtigt wird.

Mit besonderem Vorteil wird die Erfindung bei optoelektronischen Entfernungsmessern von fotografischen oder elektronischen Kameras angewendet. Dabei werden von einem zu fotografierenden Gegenstand über zwei optische Einrichtungen zwei getrennte Abbildungen erzeugt. Den Abbildungen sind zwei erfindungsgemäße Schaltungsanordnungen individuell zugeordnet, und zwar derart, daß sie mit ihren linear zueinander angeordneten Sensorelementen auf zwei einander entsprechende Zeilen der Abbildungen ausgerichtet sind und somit die Helligkeitsverläufe längs dieser Zeilen abtasten. Für eine vorgegebene Entfernung des Gegenstandes (z. B. die Entfernung »Unendlich«) sind die Helligkeitsverläufe längs der beiden Zeilen gleich, wobei eine maximale Korrelation zwischen den binär codierten Ausgangssignalen beider Schaltungsanordnungen besteht. Weicht die tatsächliche Entfernung des Gegenstandes von der vorgegebenen Entfernung ab, so verschiebt sich der Helligkeitsverlauf wenigstens einer der beiden Zeilen gegenüber der Lage, die er bei der vorgegebenen Entfernung des Gegenstandes einnimmt. Dabei nimmt die Korrelation zwischen den Ausgangssignalen ab. Man verschiebt nun die seriell aus einem Schieberegister ausgelesenen, binär codierten Ausgangssignale der einen erfindungsgemäßen Schaltung, die der einen Zeile zugeordnet ist, gegenüber den entsprechenden Ausgangssignalen der anderen erfindungsgemäßen Schaltung, die auf die andere Zeile ausgerichtet ist, solange, bis eine optimale Korrelation erreicht wird. Aus der Größe dieser Verschiebung ergibt sich ein Maß für die Abweichung der tatsächlichen Entfernung des Gegenstandes von der vorgegebenen Entfernung und damit eine Aussage über die tatsächliche Entfernung. Die Verarbeitung von digitalisierten Sensorsignalen zum Zwecke einer solchen Entfernungsmessung ist beispielsweise der europäischen Patentanmeldung EP-A-0 026 834 zu entnehmen.

## Patentansprüche

1. Schaltungsanordnung zur binären Codierung der Sensorsignale einer Mehrzahl von optoelektronischen Sensorelementen ($D_{N-M}$, $D_N$), bei der mehrere Bewerter ($B_{N-M}$, $B_N$) zur Ableitung einer Mehrzahl von binären Ausgangssignalen vorgesehen sind, die an einer Mehrzahl von Schaltungsausgängen ($A_N$) auftreten und von denen jedes einzelne das Ergebnis eines Größenvergleichs zwischen den optisch erzeugten Ladungen zweier Sensorelemente ($D_{N-M}$, $D_N$) darstellt, die zueinander benachbart oder in einem geringen Abstand voneinander angeordnet sind, dadurch gekennzeichnet, daß jeder Bewerter ($B_N$) einen Inverter (T1, T2) aufweist, der aus einem Schalttransistor (T1) und einem zu diesem in Serie geschalteten Lastelement (T2) besteht, sowie einen Barrieretransistor (T3), der den Ausgang (2) eines Sensorelementes mit dem Invertereingang (3) verbindet, und einen Rücksetztransistor (T4), der den Invertereingang (3) mit einer eine konstante Spannung liefernden Spannungsquelle verbindet, und daß je zwei Bewerter ($B_{N-M}$, $B_N$), die zwei zu einem Größenvergleich herangezogenen Sensorelementen individuell zugeordnet sind, in der Weise miteinander verschaltet sind, daß der Ausgang (4) des einen Bewerters ($B_N$) über einen elektronischen Schalter (7) mit einem Schaltungsausgang ($A_N$) verbunden ist und der Ausgang (4') des anderen Bewerters ($B_{N-M}$) zur Aussteuerung des elektronischen Schalters (7) dient.

2. Schaltungsanordnung nach Anspruch 1, dadurch gekennzeichnet, daß die Sensorelemente ($D_{N-M}$, $D_N$) nebeneinander in einer Reihe angeordnet sind.

3. Schaltungsanordnung nach Anspruch 1 oder 2, dadurch gekennzeichnet, daß der elektronische Schalter (7) aus einem Feldeffekt-Schalttransistor (T8) besteht, dessen Source-Drain-Strecke dem Ausgang (4) des einen Bewerters ($B_N$) nachgeschaltet ist, und dessen Gate mit dem Ausgang eines dem anderen Bewerter ($B_{N-M}$) nachgeschalteten, weiteren Inverters ($VT_{N-M}$) verbunden ist.

4. Schaltungsanordnung nach einem der Ansprüche 1—3, dadurch gekennzeichnet, daß die Schaltungsausgänge ($A_N$) mit den Eingängen der einzelnen Stufen ($S_N$) eines statischen oder dynamischen Schieberegisters (S) beschaltet sind.

5. Schaltungsanordnung nach einem der Ansprüche 1—4, dadurch gekennzeichnet, daß die Schaltungsausgänge ($A_N$) mit bistabilen Kippstufen (23) beschaltet sind, die als statische Zwischenspeicher der binären Ausgangssignale dienen.

6. Schaltungsanordnung nach einem der Ansprüche 1—5, dadurch gekennzeichnet, daß die Ausgänge (2) der Sensorelemente ($D_N$) jeweils über elektronische Schalter (T5) an einen Anschluß (8) geführt sind, der mit einem Bezugspotential beschaltbar ist.

7. Schaltungsanordnung nach einem der Ansprüche 1—6, dadurch gekennzeichnet, daß die Sensorelemente ($D_N$) zusammen mit den als Feldeffekttransistoren ausgebildeten Barrieretransistoren (T3) und den Invertern (T1, T2) auf einem dotierten Halbleiterkörper (15) monolithisch integriert sind.

8. Schaltungsanordnung nach einem der vorhergehenden Ansprüche, dadurch gekennzeichnet, daß die Sensorelemente ($D_N$) als Fotodioden ausgebildet sind.

9. Schaltungsanordnung nach einem der Ansprüche 1 bis 7, dadurch gekennzeichnet, daß die Sensorelemente als MIS-Kondensatoren (K) ausgebildet sind.

10. Schaltungsanordnung nach einem der Ansprüche 1 bis 7, dadurch gekennzeichnet, daß die Sensorelemente aus Fotodioden ($D_N$) und zu diesen benachbarten MIS-Kondensatoren (K) bestehen.

11. Schaltungsanordnung nach einem der vorhergehenden Ansprüche, dadurch gekennzeichnet, daß eine erste Kapazität ($C_1$) vorgesehen ist, die über einen zweiten Schalttransistor (T16) mit einem Versorgungsspannungs-Anschluß (28) verbunden ist, daß die erste Elektrode dieser Kapazität ($C_1$) über einen dritten Schalttransistor (T17) einerseits mit dem Gate des Barrieretransistors (T3) und andererseits mit dem ersten Anschluß (29) einer Serienschaltung aus einer zweiten Kapazität ($C_{30}$) und einem vierten Schalttransistor (T18) verbunden ist, daß der zweite Anschluß der Serienschaltung ($C_{30}$, T18) mit der zweiten Elektrode der ersten Kapazität ($C_1$) verbunden ist und daß das Gate des Barrieretransistors (T3) über einen fünften Schalttransistor (T19) an das Bezugspotential der Schaltung gelegt ist.

12. Schaltungsanordnung nach Anspruch 11, dadurch gekennzeichnet, daß das Gate des Barrieretransistors (T3) über ein Lastelement (T21) mit dem Versorgungsspannungs-Anschluß (28) verbunden ist.

13. Verfahren zum Betrieb einer Schaltungsanordnung nach einem der vorhergehenden Ansprüche, die wenigstens teilweise monolithisch integriert ist und deren Transistoren als Feldeffekt-Transistoren ausgebildet sind, dadurch gekennzeichnet, daß die Invertereingänge (3) und die Sensorelemente ($D_N$) durch Zuführung einer Taktimpulsspannung ($\Phi_R$) an die Gates der Rücksetztransistoren (T4) und einer Impulsspannung ($\Phi_S$) an die Gates der Barrieretransistoren (T3) auf ein hohes Potential rückgesetzt werden, daß die Impulsspannung ($\Phi_S$) anschließend soweit abgesenkt wird, daß unterhalb der Gates der Barrieretransistoren (T3) durch die Impulsspannung ($\Phi_S$) einstellbare Potentialbarrieren entstehen, daß nach dem Abschalten der Taktimpulsspannung ($\Phi_R$) in den Sensorelementen ($D_N$) angesammelte, optisch erzeugte Ladungsträger nach dem Überwinden der Potentialbarrieren zum Umschalten der Inverter (T1, T2) herangezogen werden, daß die Ausgangssignale der Bewerter (T1, T2) in Abhängigkeit von den Schaltzuständen der elektronischen Schalter (7) an die Schaltungsausgänge ($A_N$) weitergegeben werden und daß die Ausgänge (2) der Sensorelemente ($D_N$) anschließend kurzzeitig auf ein Bezugspotential gelegt werden.

14. Verfahren nach Anspruch 13 zum Betrieb einer Schaltungsanordnung nach Anspruch 12, dadurch gekennzeichnet, daß die Impulsspannung ($\Phi_S$) nach dem Absenken wieder stetig vergrößert wird (30).

## Claims

1. A circuit arrangement for the binary coding of the sensor signals of a plurality of opto-electronic sensor elements ($D_{N-M}$, $D_N$) in which a plurality of evaluators ($B_{N-M}$, $B_N$) are provided for the derivation of a plurality of binary output signals, which occur at a plurality of circuit outputs ($A_N$) and each individual member of which represents the result of a value comparison between the optically produced charges of two sensor elements ($D_{N-M}$, $D_N$) which are arranged adjacent one another or at a short interval one from the other, characterised in that each evaluator ($B_N$) is provided with an inverter (T1, T2) which consists of a switching transistor (T1) and a series load element (T2), and with a barrier transistor (T3) which connects the output (2) of a sensor element to the inverter input (3), and with a reset transistor (T4) which connects the inverter input (3) to a voltage source which supplies a constant voltage, and that two evaluators ($B_{N-M}$, $B_N$) individually assigned to two sensor elements used for a value comparison are connected one to the other in such manner that the output (4) of the one evaluator ($B_N$) is connected via an electronic switch (7) to a circuit output ($A_N$) and the output (4') of the other evaluator ($B_{N-M}$) serves to modulate the electronic switch (7).

2. A circuit arrangement as claimed in Claim 1, characterised in that the sensor elements ($D_{N-M}$, $D_N$) are arranged in series beside one another.

3. A circuit arrangement as claimed in Claim 1 or 2, characterised in that the electronic switch (7) consists of a field effect switching transistor (T8) whose source-drain path is connected to the output (4) of the one evaluator ($B_N$) and whose gate is connected to the output of a further inverter ($VT_{N-M}$) connected to the output of the other evaluator ($B_{N-M}$).

4. A circuit arrangement as claimed in one of Claims 1 to 3, characterised in that the circuit outputs ($A_N$) are connected to the inputs of the individual stages ($S_N$) of a static or dynamic shift register (S).

5. A circuit arrangement as claimed in one of Claims 1 to 4, characterised in that the circuit outputs ($A_N$) are connected to bistable flip-flops (23) which serve as static intermediate stores for the binary output signals.

6. A circuit arrangement as claimed in one of Claims 1 to 5, characterised in that the outputs (2) of the sensor elementes ($D_N$) each lead via electronic switches (T5) to a terminal (8) which can be connected to a reference potential.

7. A circuit arrangement as claimed in one of Claims 1 to 6, characterised in that the sensor elements ($D_N$) are monolithically integrated on a doped semiconductor body (15) together with field effect barrier transistors (T3) and inverters (T1, T2).

8. A circuit arrangement as claimed in one of the preceding Claims, characterised in that the sensor elements ($D_N$) are photo-diodes.

9. A circuit arrangement as claimed in one of Claims 1 to 7, characterised in that the sensor elements are MIS capacitors (K).

10. A circuit arrangement as claimed in one of Claims 1 to 7, characterised in that the sensor elements consist of photo-diodes ($D_N$) and MIS capacitors (K) adjacent to said photo-diodes.

11. A circuit arrangement as claimed in one of the preceding Claims, characterised in that a first capacitor ($C_1$) is provided, connected via a second switching transistor (T16) to a supply voltage terminal (28), that the first electrode of this capacitor ($C_1$) is connected via a third switching transistor (T17) to the gate of the barrier transistor (T3) and to the first terminal (29) of a series arrangement consisting of a second capacitor ($C_{30}$) and a fourth switching transistor (T18), that the second terminal of the series arrangement ($C_{30}$, T18) is connected to the second electrode of the first capacitor ($C_1$) and that the gate of the barrier transistor (T3) is connected via a fifth switching transistor (T19) to the reference potential of the circuit.

12. A circuit arrangement as claimed in Claim 11, characterised in that the gate of the barrier transistor (T3) is connected via a load element (T21) to the supply voltage terminal (28).

13. A method of operating a circuit arrangement as claimed in one of the preceding Claims, which is at least partially monolithically integrated and whose transistors are designed as field effect transistors, characterised in that the inverter inputs (3) and the sensor elements ($D_N$) are reset to a high potential, a clock pulse voltage ($\Phi_R$) being supplied to the gates of the reset transistors (T4) and a pulse voltage ($\Phi_S$) to the gates of the barrier transistors (T3), that the pulse voltage ($\Phi_S$) is then lowered to such an extent that potential barriers occur beneath the gates of the barrier transistors (T3) which are adjustable by the pulse voltage ($\Phi_S$), that following the disconnection of the clock pulse voltage ($\Phi_R$), optically produced charge carriers which have accumulated in the sensor elements ($D_N$) are used, to switch over the inverters (T1, T2) when the potential barriers have been overcome, that the output signals of the evaluators (T1, T2) are forwarded to the circuit outputs ($A_N$) in dependence upon the switching states of the electronic switches (7), and that the outputs (2) of the sensor elements ($D_N$) are then temporarily connected to a reference potential.

14. A method as claimed in Claim 13, for the operation of a circuit arrangement as claimed in Claim 12, characterised in that having fallen, the pulse voltage ($\Phi_S$) is steadily increased again, (30).

## Revendications

1. Montage pour réaliser le codage binaire des signaux de détection d'une multiplicité d'éléments détecteurs optoélectroniques ($D_1 - N$, $D_N$) et dans lequel is est prévu plusieurs dispositifs de pondération ($B_{N-M}$, $B_N$) servant à dériver une multiplicité de signaux de sortie binaires qui apparaissent au niveau d'une multiplicité de sorties ($A_N$) du circuit et dont chacun représente le résultat d'une comparaison entre les grandeurs des charges, produites optiquement, de deux éléments détecteurs ($D_{N-M}$, $D_N$), qui sont voisins l'un de l'autre ou sont disposés à une faible distance l'un de l'autre, caractérisé par le fait que chaque dispositif de pondération ($B_N$) comporte un universeur (T1, T2) qui est constitué par un transistor de commutation (T1) et par un élément de charge (T2) branché en série avec ce transistor, ainsi qu'un transistor à barrière (T3) qui relie la sortie (2) d'un élément détecteur à l'entrée (3) d'un inverseur, un transistor de remise à l'état initial (T4), qui relie l'entrée (3) de l'inverseur à une source de tension délivrant une tension constante, et que respectivement deux dispositifs de pondération ($B_{N-M}$, $B_N$) qui sont associés individuellement à deux éléments détecteurs utilisés pour réaliser une comparaison de grandeurs, sont raccordés l'un à l'autre de telle sorte que la sortie (4) d'un dispositif de pondération ($B_N$) est reliée par l'intermédiaire d'un commutateur électronique (7) à une sortie ($A_N$) du circuit et que la sortie (4') de l'autre dispositif de pondération ($B_{N-M}$) est utilisée pour réaliser la commande du commutateur électronique (7).

2. Montage suivant la revendication 1, caractérisé par le fait que les éléments détecteurs ($D_{N-M}$, $D_N$) sont dispoés côte-à-côte suivant une rangée.

3. Montage suivant la revendication 1 ou 2, caractérisé par le fait que le commutateur électronique (7) est constitué par un transistor de commutation à effet de champ (T8), dont la voie source-drain est branchée en aval de la sortie (4) d'un dispositif de pondération ($B_N$) et dont la grille est reliée à la sortie d'un autre inverseur ($VT_{N-M}$) branché en aval de l'autre dispositif de pondération ($B_{N-M}$).

4. Montage suivant l'une des revendications 1 à 3, caractérisé par le fait que les sorties ($A_N$) du circuit sont reliées aux entrées des différents étages ($S_N$) d'un registre à décalage statique ou dynamique (S).

5. Montage suivant l'une des revendications 1–4, caractérisé en ce que les sorties ($A_N$) du circuit sont raccordées à des étages à bascule bistable (23) qui sont utilisés en tant que mémoires intermédiaires statiques des signaux de sortie binaires.

6. Montage suivant l'une des revendications 1–5, caractérisé en ce que les sorties (2) des éléments détecteurs (D_N) sont reliées respectivement par l'intermédiaire de commutateurs électroniques (T5) à une borne (8) qui peut être placée à un potentiel de référence.

7. Montage suivant l'une des revendications 1—6, caractérisé par le fait que les éléments détecteurs (D_N) sont intégrés de façon monolithique, ainsi que les transistors à barrière (T3) réalisés sous la forme de transistors à effet de champ et les inverseurs (T1, T2), dans un corps semiconducteur dopé (15).

8. Montage suivant des revendications précédentes caractérisé par le fait que les éléments détecteurs (D_N) sont réalisés sous la forme de photodiodes.

9. Montage suivant l'une des revendications 1 à 7, caractérisé par le fait que les éléments détecteurs sont réalisés sous la forme de condensateurs MIS (K).

10. Montage suivant l'une des revendications 1 à 7, caractérisé par le fait que les éléments détecteurs sont constitués par des photodiodes (D_N) et par des condensateurs MIS (K) voisins de ces diodes.

11. Montage suivant l'une des revendications précédentes, caractérisé par le fait qu'il est prévu une première capacité (C_1), qui est reliée par l'intermédiaire d'un second transistor de commutation (T16) à une borne (28) de tension d'alimentation, que la première électrode de cette capacité (C_1) est reliée par l'intermédiaire d'un troisième transistor de commutation (T17) d'une part à la grille du transistor à barrière (T3) et d'autre part à la première borne (29) d'un circuit série formé d'une seconde capacité (C_{30}) et d'un quatrième transistor de commutation (T18), et que la seconde borne du circuit série (C_{30}, T18) est reliée à la seconde électrode de la première capacité (C_1) et que la grille du transistor à barrière (T3) est reliée par l'intermédiaire d'un cinquième transistor de commutation (T19) au potentiel de référence du circuit.

12. Montage suivant la revendication 11, caractérisé par le fait quel la grille du transistor à barrière (T3) est reliée par l'intermédiaire d'un élément de charge (T21) à la borne de la tension d'alimentation.

13. Procédé de mise en œuvre d'un montage suivant l'une des revendications précédentes, qui est au moins partiellement intégré de façon monolithique et dont les transistors sont réalisés sous la forme de transistors à effet de champ, caractérisé par le fait qu'on ramène à un potentiel élevé les entrées (3) de l'inverseur et des éléments détecteurs (D_N) au moyen de l'envoi d'une tension impulsionnelle de cadence ($\Phi_5$) aux grilles des transistors de remise à l'état initial (T4) et par l'envoi d'une tension impulsionnelle ($\Phi_S$) aux grilles des transistors à barrière (T3), qu'on réduit ensuite la tension impulsionnelle ($\Phi_S$) au point qu'il apparaît des barrières de potentiel réglables à l'aide de la tension impulsionnelle ($\Phi_S$) au-dessus des grilles des transistors à barrière (T3), que des porteurs de charge produits optiquement et accumulés dans les éléments détecteurs (D_N) après le débranchement de la tension impulsionnelle de cadence ($\Phi_R$) sont utilisés pour réaliser, après qu'ils aient vaincu les barrières de potentiel, la commutation des inverseurs (T1, T2), et les signaux de sortie des dispositifs de pondération (T1, T2) sont retransmis aux sorties (A_N) du circuit en fonction des états de commutation des commutateurs électroniques (7) et que les sorties (2) des éléments détecteurs (D_N) sont placées ensuite à un potentiel de référence pendant un bref intervalle de temps.

14. Procédé suivant la revendication 13, pour la mise en œuvre d'un montage suivant la revendication 12, caractérisé par le fait que la tension impulsionnelle ($\Phi_S$) est à nouveau accrue de façon continue, après sa diminution.

FIG 1

# FIG 2

# FIG 3

## FIG 4

## FIG 5

# FIG 6

# FIG 7

# FIG 8